# EUROPEAN PATENT APPLICATION

(11) **EP 4 727 061 A1**
(43) Date of publication of application: **15.04.2026**
(21) Application number: 24205812.1
(22) Date of filing: 10.10.2024
(51) Int. Cl.: H04L 9/40

(54) **COMPUTER-IMPLEMENTED METHOD TO DIVERT HACKER ATTACKS ON A COMPUTER NETWORK**

(71) Applicant: Markus Nissl Consulting GmbH, 1220 Wien (AT)
(72) Inventor: Nissl, Markus, Wien (AT); Heinzl, Rene, Wien (AT)
(74) Representative: Puchberger & Partner Patentanwälte

(57) **Abstract**

A system and method for cybersecurity protection that dynamically assesses the skill level of a hacker using AI and generates an adaptive digital twin of the network environment. The system strategically deploys lures and decoys within the digital twin to deceive and guide the hacker, effectively protecting the real network assets. This approach is resource-efficient, particularly for large networks, and is designed to counter the evolving threat of AI-driven cyber-attacks.

## Description

The present invention pertains to the field of cybersecurity. Specifically, it involves methods and systems to divert hacker attacks away from critical assets in a computer network.

Existing cybersecurity systems, like Process-Aware Attack Graphs (AAGs), rely on static, precomputed models of potential attack paths. While AAGs represent various vectors, such as lateral movements and privilege escalation, they focus on known vulnerabilities and do not adapt to real-time attacker behavior. This makes them insufficient against modern, AI-driven hacker attacks

AI-driven hacker attacks autonomously adjust strategies and tools in response to network defenses, making them unpredictable and hard to counter with static systems like AAGs. As a result, these traditional approaches fail to provide adequate protection against adaptive threats.

These hacker attacks are of varying skills and use different tools. It is difficult to predict the skills and tools of AI-driven hacker attacks, since these are able to adjust their skills and tool sets on the infiltrated computer network.

The main objects of the Invention are thus to provide a resource-efficient method for diverting hacker attacks away from critical assets in a computer network in order to counter the threat of AI-driven cyber-attacks.

These and other objects are achieved by methods and systems according to the independent claims.

A computer-implemented method according to the invention is activated as soon as a hacker attack has been detected on one computer of a computer network.

In a first step, a **hacker skill assessment module** estimates a skill level of the hacker attack by collecting input data indicative of the skill level of the hacker attack and applying a computer-implemented machine-learning model to the input data.

The Hacker Skill Assessment Module is an AI-driven component designed to evaluate the skill level of a hacker in real-time. It does so by analyzing the hacker's behavior, techniques, and interactions with the network, as well as their response to embedded lures and decoys. Unlike traditional attack graph methods, this module interacts directly with lures and decoys, dynamically adapting to hacker behavior. The module continuously monitors the hacker's actions, assessing factors such as the speed of their movements, the sophistication of the tools they use, and their decision-making patterns. It evaluates how hackers react to AI-generated decoys. A hacker who falls for basic lures is assessed differently than one who avoids them.

In a further step, a **digital twin generator** generates a digital twin of the computer network, wherein the complexity of the digital twin is based on the estimated skill level of the hacker attack. The digital twin generator creates a digital twin of the network. The twin evolves based on real-time feedback from the Hacker Skill Assessment Module, focusing resources on deceiving the hacker. The generator creates a digital twin that reflects only the relevant portions of the network, based on the hacker's skill level and actions. For large networks, this means simulating only the areas the hacker is likely to target, thus conserving computational resources. As the hacker's skill assessment changes, the digital twin adapts and includes more sophisticated defense means to match hacker tactics. The digital twin is designed to be indistinguishable from the actual network by the hacker. It includes simulated systems, data, and network traffic that are realistic enough to maintain the hacker's engagement.

In a further step, a **decoy and lure management module** places lures and/or decoys in the network and/or in the digital twin to deceive, engage, and guide the hacker attack away from critical network assets within the network. The decoy and lure management module strategically places decoys and lures to guide the hacker within the network and/or the digital twin. These elements are designed to attract the hacker's attention and guide their actions, diverting them away from critical network assets within the network. Decoys and lures are placed in the real system and also in the digital twin based on AI-driven behavior prediction. For example, lures such as fake credentials or enticing file names (e.g., "Q4_Financial_Report") attract the hacker. As the hacker interacts with the twin, the module adjusts the placement and nature of the decoys and lures. For example, if a hacker is bypassing simple decoys, the system introduces more sophisticated ones. The hacker's interactions with these elements are fed back to the Hacker Skill Assessment Module, helping to refine the skill score and guide further adaptations of the twin.

In an embodiment of the invention, the hacker skill assessment module continuously collects input data and **updates** the estimated skill level in real time.

In an embodiment of the invention, the digital twin generator and the decoy and lure management module use these real-time estimated skill levels to **adjust the complexity** of the digital twin and/or the complexity of the lures and/or decoys. In particular, it might take adjustments if a change in the estimated skill level is detected.

By continuously adjusting the complexity and placement of decoys and lures, the hacker's engagement with non-critical assets is prolonged, thereby diverting attention away from valuable network resources and forcing the attacker to expend additional time, effort and computing resources in interacting with the digital twin.

In particular, the digital twin generator might produce a network simulation that is dynamically scaled and adapted in real-time based on estimated skill level, wherein predictive AI modeling is used to anticipate future attacks.

This allows the method to be very resource-efficient, as it only needs the computing or storage resources in the network to defend against hacker attacks with the specifically estimated skill level. Basic attacks can be diverted with small resources, while only sophisticated attacks require large resources.

In an embodiment of the invention, the machine-learning model in the hacker skill assessment module is trained to detect AI-driven hacker attacks. The module might be trained to identify patterns and signatures typical of AI-driven attacks. This includes rapid decision-making, high-speed probing, and the use of sophisticated algorithms to breach defenses. Upon detecting an AI-driven hacker attack, the AI countermeasures module activates advanced defense mechanisms within the digital twin. These might include introducing complex lures that challenge the AI or rapidly changing the environment to confuse the attacking system. The AI countermeasures module continuously learns from interactions with AI-driven attacks, updating its database of signatures and refining its responses to ensure ongoing effectiveness. While traditional systems only react to hacker activity after it occurs, the invention enables a proactive defense by anticipating hacker behavior.

The invention further relates to a computer program comprising instructions which when the program is executed by a computer within a computer network cause the computer to carry out a method according to the invention.

The invention further relates to a computer-readable medium comprising computer-executable instructions causing a computer within a computer network to perform a method according to the invention.

The invention further relates to a data processing apparatus, in particular a computer within a computer network, comprising means adapted for carrying out a method according to the invention. The data processing apparatus might further comprise an **incident reporting module** adapted to generate a report documenting the hacker's activities, effectiveness of decoys, and overall system performance, while preserving evidence for law enforcement and prosecution.

Further features of the invention are apparent from the claims, the figures and the below description of embodiments. Particular non-exclusive Embodiments of methods and systems according to the invention are described below.

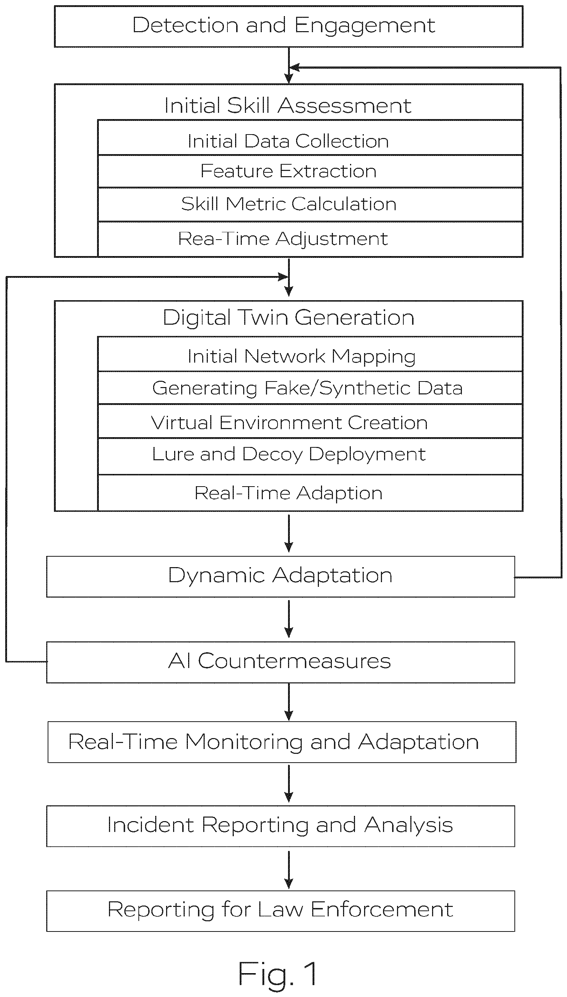

**Fig. 1** shows a schematic flow diagram of a method according to the invention. The method is carried out by a computer system in a computer network 1, which comprises several computers 3 with critical assets 2. The method comprises the following steps:

### Step 1: Detection and Engagement

As soon as a computer 3 within the network 1 detects suspicious activity, it activates the hacker skill assessment module 4. It immediately begins to collect input data on the hacker's behavior within the computer 3 and the computer network 1.

### Step 2: Initial Skill Assessment

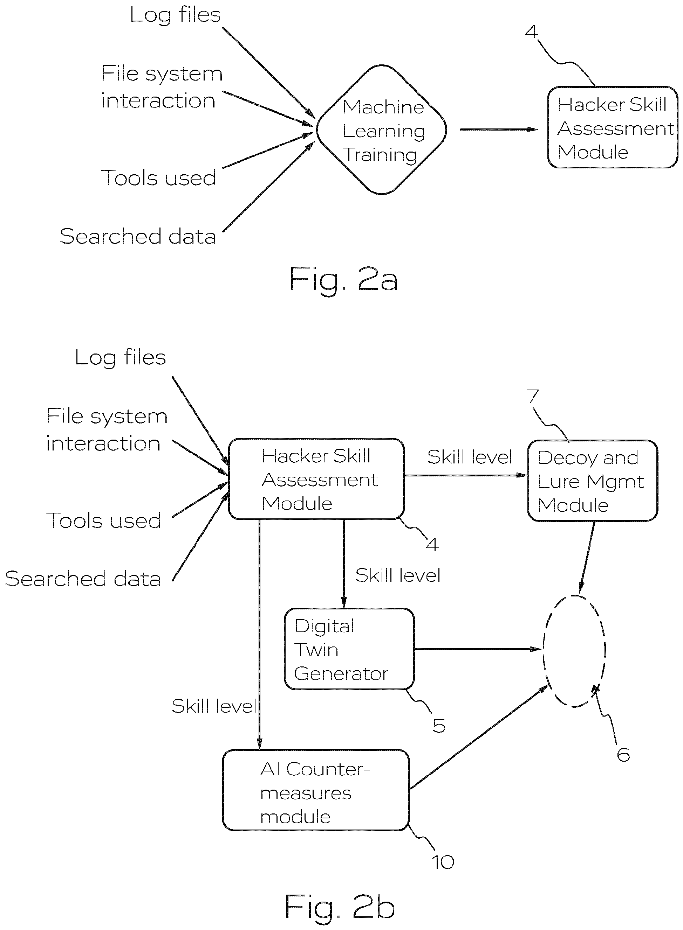

Network traffic and hacker behavior is monitored (e.g., command sequences, tool sophistication) to conduct an initial skill assessment. A machine learning model within a hacker skill assessment module 4 is used to estimate a skill level of the hacker attack. Data from past events, such as typical log files, file system interactions, used tools, and searched data, are used for training of the machine-learning model within the hacker skill assessment module 4, as shown in **Fig. 2a****.**

### Step 2.1: Initial Data Collection

All incoming and outgoing traffic within the network 1 is collected. This comprises data on various parameters such as connection attempts, data packet sizes, access times, and the types of requests by the hacker. The system tracks the hacker's actions within the network 1, including the sequence of commands executed, the speed and efficiency of those commands, and the types of tools or exploits used.

### Step 2.2: Feature Extraction

The system classifies each action taken by the hacker into predefined categories (e.g., reconnaissance, exploitation, privilege escalation). These categories are based on common attack patterns and tactics known from cybersecurity databases.

Using machine learning models trained on large datasets of known hacking techniques, the system recognizes patterns in the hacker's behavior. This includes identifying whether the hacker is systematically probing for vulnerabilities or focusing on specific network assets. As part of the pattern recognition process, the system continuously monitors and updates the hacker's behavior profile in real-time. This involves extracting not only static features but also contextual information that can indicate shifts in strategy or skill level, such as transitioning from straightforward attacks to more sophisticated, evasive maneuvers. This ongoing calibration ensures that the system maintains an accurate and up-to-date understanding of the hacker's skill level as the attack evolves.

### Step 2.3: Skill Metric Calculation

The system uses the extracted features to calculate specific metrics related to the hacker's skill level. These metrics include, for example, the following:
- Speed: How quickly the hacker executes various phases of the attack.
- Tool or Technique Sophistication: The complexity and effectiveness of the tools being used, or, if no tools are utilized, the sophistication of the techniques and strategies employed by the hacker. This includes analyzing manual methods such as command-line inputs, custom scripts, or other non-tool-based actions that demonstrate advanced knowledge and skill.
- Adaptability: The hacker's ability to change tactics when encountering obstacles, such as decoys or lures.
- Strategic Targeting: The specific areas or assets within the network that the hacker strategically focuses on, such as executive accounts, confidential research data, or financial records. This metric evaluates the hacker's ability to identify and target the most valuable or sensitive parts of the network, indicating a higher level of threat and strategic intent.
- Adaptive Behavioral Prediction: Integrated within the Dynamic Skill Scoring Algorithm, this feature allows the system to predict potential future actions based on the hacker's current behavior patterns. By analyzing the hacker's tactics, the system can anticipate their next moves and adjust the defense strategy proactively. This predictive capability enhances the accuracy and utility of the skill metric by enabling the system to foresee and prepare for the hacker's likely actions.

**Fig. 2b** shows a schematic overview of the modules within the system according to this embodiment. The hacker skill assessment module 4 estimates a skill level of the hacker attack and provides it to the digital twin generator 5 to generate a digital twin 6. The hacker skill assessment module 4 provides the skill level of the hacker attack further to the decoy and lure management module 7 and the AI countermeasures module 10.

### Step 2.4: Real-Time Adjustment

As the hacker continues to interact with the network, the system continuously updates the skill level assessment in real-time. This ensures that the system can react promptly to changes in the hacker's tactics or behavior. The updated skill score, influenced by both the continuous calibration and predictive modeling, is fed back into the system, influencing the generation and adaptation of the digital twin. Using the predictions from the Adaptive Behavioral Prediction feature, the system dynamically alters the digital twin, deploys specific decoys, or modifies the network defenses preemptively. This ensures that the system is not just reacting to the hacker's actions but is proactively shaping the environment to stay one step ahead of the hacker.

As the system detects changes in the hacker's tactics, it recalibrates the skill level assessment on-the-fly, ensuring that the adaptive defenses remain aligned with the hacker's evolving skill set. This real-time recalibration allows the system to adjust contextually to the attack, deploying more sophisticated defenses if the hacker's behavior indicates an increase in skill.

In summary, Adaptive Behavioral Prediction would enhance Skill Metric Calculation and Real-Time Adjustment by enabling proactive and anticipatory defenses, while Continuous Skill Level Calibration would refine Feature Extraction and Real-Time Adjustment by ensuring that the system's response evolves in tandem with the hacker's shifting strategies and skill levels.

### Step 3: Adaptive Digital Twin Generation

Based on the initial skill assessment, the Adaptive Digital Twin Generator 5 creates a tailored digital twin 6 of the network, focusing on the most relevant areas and integrating appropriate lures 8 and decoys 9. The digital twin 6 is designed to deceive the hacker, guide their actions, and protect critical assets in real time.

The following steps outline the detailed process to enhance the system's adaptability and resource efficiency. Unlike other systems, which focus on overall network security control, this method dynamically mirrors only relevant network areas based on the hacker's observed behavior, minimizing resource consumption.

### Step 3.1: Initial Network Mapping

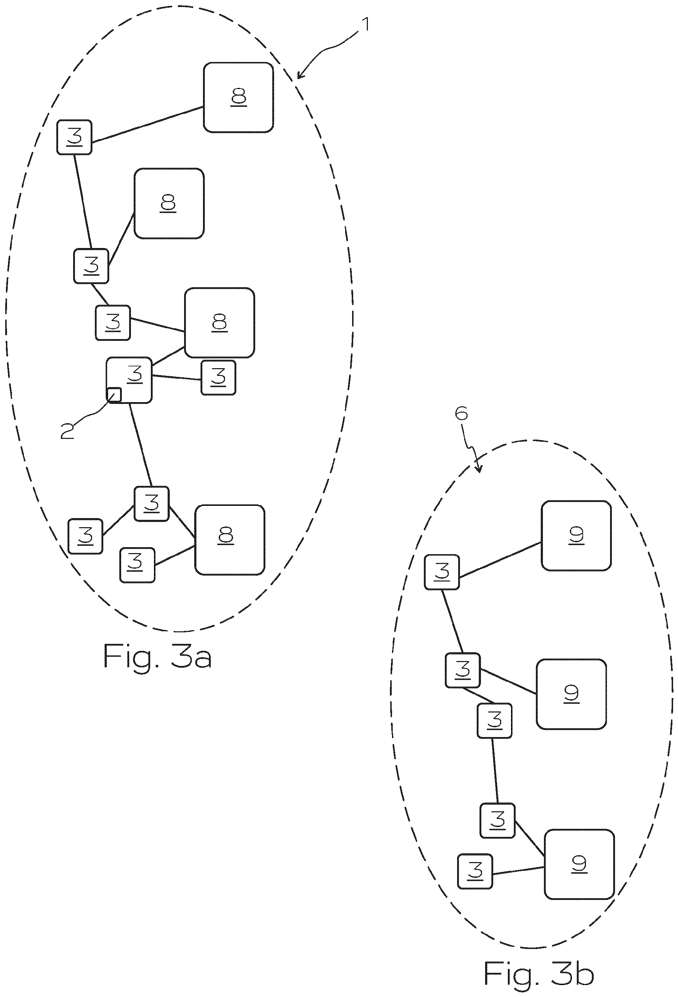

**Figure 3a** shows a schematic representation of a computer network 1 according to the invention, comprising computers 3, critical assets 2 and lures 8. Lures 8 can be:
- Credential-Based Lures: Fake admin credentials, SSH keys, and weak/default passwords to attract brute-force attacks.
- File-Based Lures: Enticing file names (e.g., "Financial_Report.pdf"), fake user profiles, legal contracts, source code, and embedded credentials within documents to mislead hackers into thinking they've found sensitive information.
- Service-Based Lures: Simulated vulnerable servers (e.g., databases, web servers), fake email accounts, and weak API endpoints to engage hackers with decoy systems.
- Network-Based Lures: Open ports, unused IP ranges, decoy VPN access points, and simulated insecure IoT devices to attract network scanning and exploitation.
- Data-Based Lures: Fake transaction records, sensitive corporate data, and financial logs to engage attackers targeting valuable information.
- Multimedia and Communication Lures: Simulated video feeds, phone records, chat logs, and internal communications that seem sensitive.
- Cloud-Based Lures: Decoy cloud instances, fake storage buckets, and cloud APIs to deceive attackers targeting cloud environments.
- Network Traffic-Based Lures: Simulated data flows and network traffic that appears to involve sensitive information or command/control channels.
- System-Based Lures: Fake operating systems, administrative tools, and backup systems designed to look vulnerable or valuable to hackers.

The system begins by utilizing AI-driven scan script templates that automate the scanning of the network 1. These templates are tailored for various device types (e.g., servers, routers, loT devices) and communication standards (e.g., TCP/IP).

The scanning process identifies:
- Devices, Nodes, and Connections: The entire network topology is mapped, detecting all active devices and connections, including network switches, firewalls, and internal communication paths.
- Asset Prioritization: The system identifies and prioritizes critical assets 2 based on their value to both the organization and potential attackers. Key data includes:
   ∘ Passwords and Credentials: Detection of weak or default passwords and admin-level access points.
   ∘ Financial Data: High-value financial records and transaction systems.
   ∘ User Data: Sensitive customer or employee information, such as PII (Personal Identifiable Information) and internal communications.
   ∘ Log Files: Historical logs from critical systems that reveal vulnerabilities or previous attack attempts.

The system further carries out an identification of vulnerabilities within the network. Examples of vulnerabilities detected include:
- Weak Passwords: Default or easily guessed credentials for critical systems.
- Unprotected Data: Sensitive files and databases lacking encryption or access control.
- Open Ports: Services running on open ports.

### Step 3.2: Generating Fake/Synthetic Data

After the network 1 is scanned, the system generates realistic synthetic data that mimics the actual data and activities of the organization. This synthetic data is crucial for deceiving attackers into believing they are interacting with real systems.

The system replicates, for example, the following types of data:
- Corporate Documents: Simulated internal reports, contracts, and project files.
- Private User Data: Fake customer profiles, purchase histories, and emails with realistic names, dates, and internal messaging.
- Multimedia Files: Fake videos or security footage to mimic private content, such as confidential conference calls or training sessions.
- Sensitive Data: Replicas of sensitive information like healthcare records, executive communications, or other valuable data.

The system continuously generates new fake data to mirror ongoing activity within the real network. For example, fake emails and transaction logs are created periodically to ensure that the twin remains aligned with actual business operations.

### Step 3.3: Virtual Environment Creation

Alongside data generation, the system sets up cloud instances that form the backbone of the digital twin 6. These instances are configured to closely replicate the real network's infrastructure. The system replicates hardware configurations like CPU, memory, and storage to match the real environment. Cloud instances are assigned IP addresses, firewall rules, and VPN settings that mirror the actual network, ensuring realistic network communication. Virtual containers are initialized with the same operating systems, applications, and services present in the real network.

Once the cloud instances are configured, they are populated with the synthetic data. The system ensures that the fake data is seamlessly integrated into the virtual machines. Realistic network traffic is simulated between cloud instances, including processes such as file transfers, database queries, and user authentication attempts. The system synchronizes fake data with real-time changes in the real network, ensuring the twin remains an accurate and evolving reflection of the actual environment.

**Figure 3b** shows a schematic representation of a digital twin network 6, comprising virtualized computers 3 and decoys 9. Decoys can be:
- Simulated Servers and Services: Decoy servers (e.g., web, database, FTP) that look like critical infrastructure, designed to attract attackers probing the network.
- Fake Credentials and User Accounts: Decoys such as admin credentials, user profiles, and fake authentication points that lure attackers into exploiting these false assets.
- Synthetic Data and Files: Realistic but fake data, such as transaction records, confidential reports, or user information, placed within decoy systems to keep hackers engaged.
- Dynamic Decoys: These evolve based on the hacker's behavior, adjusting complexity and placement in real-time to maintain the illusion of interacting with the actual network.
- Network Traffic and Communication Decoys: Simulated traffic and communication channels (e.g., fake API endpoints, chat logs) to divert attackers from genuine systems.

### Step 3.4: Adaptive Lure and Decoy Deployment

The system deploys lures (bait) and decoys (fake systems) to mislead attackers, guiding them into the digital twin 6. These elements are tailored based on the hacker's assessed skill level. Lures might be Fake Admin Credentials or enticing file names such as "Q4_Financial_Report.pdf" or "Confidential_Client_List.xlsx". Decoys might be fake database or web servers or even entire file systems, filled with fake HR records or project files, and designed to waste the hacker's time while keeping real assets safe.

The system may further shape the virtual environment using AI-Driven behavioral insights: This allows the system to proactively shape and adjust the digital twin based on the hacker's behavior. The system might use advanced machine learning algorithms to predict the hacker's next moves based on their current actions.The AI dynamically adjusts network topology, deploys new decoys, or alters existing ones in real time to stay one step ahead of the hacker. Multiple defensive scenarios might be run in parallel within the twin, allowing the system to preemptively deploy the most effective countermeasures.

### Step 3.5: Adaptive Environment Configuration and Real-Time Adaptation

This AI-driven feature ensures efficient allocation of computational resources for the digital twin, adapting the environment based on the hacker's skill level and actions. AI algorithms assess the current state of the digital twin and allocate resources to maintain optimal performance. The complexity of the digital twin is automatically scaled depending on the severity of the hacker's attack.

For advanced attacks, the twin evolves to include more complex systems, while simpler attacks are met with a lighter version of the twin. The system minimizes resource waste by simplifying less critical parts of the digital twin when the hacker's focus shifts elsewhere.

A Dynamic Configuration Engine might be provided to automatically adjust the digital twin in real time based on predictive insights from the AI.

As the hacker interacts with the system, new decoys are deployed, or the environment is altered to mislead them further. Resources might be dynamically scaled based on the hacker's skill level. If the hacker is advanced, the system can increase the twin's complexity in real time to meet the threat.

The system continuously monitors the hacker's interactions with the twin, refining the skill assessment and adapting lures and decoys to ensure the hacker remains engaged in the twin environment without suspecting they are interacting with a simulation.

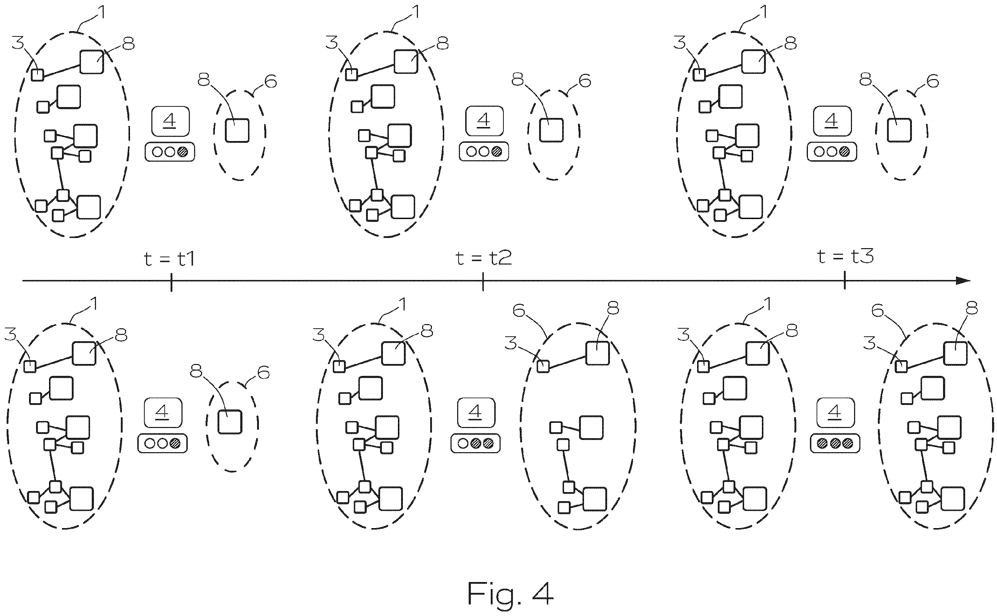

**Figure 4** shows a schematic illustration of Dynamic Adaptivity and Resource Efficiency. On the top, an example is shown where the Hacker Skill Assessment module 4 evaluates a low threat level, prompting the Digital Twin module to generate a small, resource-efficient digital twin 6 containing only a single decoy 8.

On the bottom, the Hacker Skill Assessment module 4 detects a minimal threat level, leading to the creation of a similarly minimal digital twin 6. However, as the module observes increased activity and a rising threat level, the digital twin 6 expands accordingly, generating more virtual systems and decoys. The final section on the right shows the system responding to a maximum threat level, where the digital twin 6 mirrors the complexity of the actual network 1.

The uniqueness of the digital twin generation process lies in its dynamic adaptability and resource efficiency. Traditional digital twins are static, resource-intensive, and lack the ability to evolve in response to a hacker's behavior. The AI-driven solution according to the invention continuously monitors the hacker's skill level and dynamically adapts the twin to reflect the hacker's actions.

The Al-Powered Resource Optimization ensures that the twin is generated in a resource-efficient manner, simulating only the most critical sections of the network, making it scalable for large enterprises. Additionally, Stealth Traps- lures and decoys that seamlessly mimic the real environment - are used to ensure the hacker remains deceived without realizing they are interacting with a simulated twin. This constant evolution and optimization make our digital twin solution far more sophisticated and effective than traditional static approaches.

### Step 4: Interaction and Dynamic Adaptation

As the hacker interacts with the digital twin, the system continuously monitors their actions. The Decoy and Lure Management Module and AI Countermeasures dynamically respond to the hacker's actions. Real-time adjustments ensure that the hacker remains engaged within the twin, unaware of its synthetic nature.

### Step 5: Countering Al-Driven Attacks

The AI Countermeasures Module is designed to recognize and counter AI-driven cyber-attacks, focusing on patterns typical of AI tools, such as high-speed probing, automated exploitation, and rapid decision-making. Unique features of this module include:
- Complex Decoys: The system deploys sophisticated decoys, such as fake admin credentials or enticing file names, to mislead AI-driven attackers. These decoys are dynamically adjusted based on the hacker's interactions, unlike static decoy systems in prior art.
- Real-Time Environment Alteration: The system can alter the digital twin environment in real-time, changing network configurations and deploying new defenses to confuse the attacking AI. This ensures that the hacker's AI cannot adapt to a predictable environment.
- Predictive Modeling: The module uses predictive models to anticipate the AI's next moves, allowing the system to proactively adjust defenses.
- Continuous Learning: As the attack evolves, the system learns from the AI's behavior, refining decoys and defenses dynamically. This ongoing adaptation ensures that the system remains effective even against highly adaptive AI-driven attackers.

### Step 6: Continuous Monitoring and Adaptation

The system maintains real-time monitoring of the hacker's activities within the digital twin, ensuring that every action is tracked and analyzed. As the hacker's tactics evolve, the system dynamically adjusts both the digital twin environment and the lures and decoys to maintain engagement. This includes refining the complexity of decoys, altering network topologies, and modifying synthetic data to match the hacker's skill level and strategy.

Additionally, the continuous adaptation process ensures that the system remains one step ahead, recalibrating its defenses in response to any changes in the hacker's approach. This adaptive capability minimizes the risk of detection by the hacker, keeping them trapped within the simulated environment, while protecting critical assets in the real network.

### Step 7: Incident Reporting and Analysis

Upon completion of the interaction, the system generates a comprehensive report detailing every aspect of the hacker's activity, including the methods used, specific interactions with lures and decoys, and any patterns identified during the attack. The report also assesses the effectiveness of each decoy and adaptive defense mechanism, allowing for in-depth analysis of the digital twin's overall performance.

This incident data is not only used for forensic purposes but also fed back into the system's AI algorithms to refine future responses. By learning from each interaction, the system enhances its ability to predict hacker behavior, continuously improving the efficiency of adaptive defenses and decoy placement for future engagements. Additionally, this report can be customized for legal purposes or law enforcement, providing an evidence-based record of the hacker's actions.

### Step 8: Report for Law Enforcement and Prosecution as Evidence Preservation

Following the incident, the system generates a specialized report for law enforcement and prosecution. This report serves as evidence preservation and includes all relevant information, such as a chronological record of the hacker's activities, the methods used, and any captured evidence that may be necessary for legal prosecution.

The scope of the invention is not limited to the described embodiment. The method and system according to the invention is versatile and can be deployed across various types of network environments, from small-scale corporate networks to expansive cloud infrastructures. It is particularly effective for protecting critical infrastructure and sensitive data against sophisticated, AI-driven cyber-attacks.

## Claims

1. **Computer-implemented method** to divert a hacker attack on a computer network (1) away from critical network assets (2), wherein the computer network (1) comprises a multitude of computers (3), and wherein the hacker attack has been detected on one of the computers (3),
**characterized in that** the method comprises the following steps:
a. estimating, by a **hacker skill assessment module** (4), an estimated skill level of the hacker attack by collecting input data indicative of the skill level of the hacker attack and applying a computer-implemented machine-learning model to the input data,
b. generating, by a **digital twin generator** (5), a digital twin (6) of the computer network (1), wherein the complexity of the generated digital twin (6) is based on the estimated skill level of the hacker attack,
c. generating and placing, by a **decoy and lure management module** (7), lures (8) and/or decoys (9) in the network (1) and/or in the digital twin (6) to deceive, engage, and guide the hacker attack away from critical network assets (2) within the network (1).

2. Computer-implemented method according to claim 1, **characterized in that** the hacker skill assessment module (4) continuously collects input data on the hacker's behavior and tools, and updates the estimated skill level in real time.

3. Computer-implemented method according to claim 1 or 2, **characterized in that** the digital twin generator (5) and the decoy and lure management module (7) adjust the complexity, placement and nature of the digital twin (6) and/or the lures (8) and/or the decoys (9) if a change in the estimated skill level is detected.

4. Computer-implemented method according to any of claims 1 to 3, **characterized in that** the digital twin generator (5) produces a network simulation that is dynamically scaled and adapted in real-time based on estimated skill level, wherein predictive AI modeling is used to anticipate future attacks.

5. Computer-implemented method according to any of claims 1 to 3, **characterized in that** the machine-learning model in the hacker skill assessment module (4) is trained to detect AI-driven hacker attacks, in which case advanced defense mechanisms are activated by a dedicated **AI countermeasures module (10),** such as the placement of complex lures, predictive modeling, and dynamic alteration of the virtual computer environment.

6. **Computer program** comprising instructions which when the program is executed by a computer within a computer network (1) cause the computer to carry out the method of any of claims 1 to 5.

7. **Computer-readable medium** comprising computer-executable instructions causing a computer within a computer network (1) to perform the method according to any of claims 1 to 5.

8. **Data processing apparatus,** in particular a computer within a computer network (1), comprising means adapted for carrying out the method of any of claims 1 to 5.

9. **Data processing apparatus,** in particular distributed computer system, to divert a hacker attack on a computer network (1) away from critical network assets (2), wherein the computer network (1) comprises a multitude of computers (3), and wherein the hacker attack has been detected on one of the computers (3), **characterized in that** the apparatus comprises
a. a **hacker skill assessment module** (4) adapted to estimate a skill level of the hacker attack by collecting input data indicative of the skill level of the hacker attack and applying a computer-implemented machine-learning model to the input data,
b. a **digital twin generator** (5) adapted to create a digital twin (6) of the computer network (1), wherein the complexity of the generated digital twin (6) is based on the estimated skill level of the hacker attack,
c. a **decoy and lure management module** (7) adapted to generate and place lures (8) and/or decoys (9) in the network (1) and/or in the digital twin (6) to deceive, engage, and guide the hacker attack away from critical network assets (2) within the network (1).

10. **Data processing apparatus** according to claim 9, **characterized in that** it further comprises a dedicated AI countermeasures module (10) adapted to detect and neutralize AI-driven hacker-attacks by dynamically adapting the digital twin.

11. **Data processing apparatus** according to claim 9 or 10, **characterized in that** it further comprises an incident reporting module adapted to generate a report documenting the hacker's activities, effectiveness of decoys, and overall system performance, while preserving evidence for law enforcement and prosecution.

## Amended claims

### Amended claims in accordance with Rule 137(2) EPC.

1. **Computer-implemented method** to divert a hacker attack on a computer network (1) away from critical network assets (2), wherein the computer network (1) comprises a multitude of computers (3), and wherein the hacker attack has been detected on one of the computers (3),
**characterized in that** the method comprises the following steps:
a. estimating, by a **hacker skill assessment module** (4), an estimated skill level of the hacker attack by collecting input data indicative of the skill level of the hacker attack and applying a computer-implemented machine-learning model to the input data,
b. generating, by a **digital twin generator** (5), a digital twin (6) of the computer network (1), wherein the complexity of the generated digital twin (6) is based on the estimated skill level of the hacker attack,
c. generating and placing, by a **decoy and lure management module** (7), lures (8) and/or decoys (9) in the network (1) and/or in the digital twin (6) to deceive, engage, and guide the hacker attack away from critical network assets (2) within the network (1), wherein
d. the hacker skill assessment module (4) continuously collects input data on the hacker's behavior and tools, and updates the estimated skill level in real time, and
e. the digital twin generator (5) adjusts the complexity, placement and nature of the digital twin (6) if a change in the estimated skill level is detected

2. Computer-implemented method according to claim 1, **characterized in that** the digital twin generator (5) produces a network simulation that is dynamically scaled and adapted in real-time based on estimated skill level, wherein predictive AI modeling is used to anticipate future attacks.

3. Computer-implemented method according to any of claims 1 or 2, **characterized in that** the machine-learning model in the hacker skill assessment module (4) is trained to detect AI-driven hacker attacks, in which case advanced defense mechanisms are activated by a dedicated **Al countermeasures module (10),** such as the placement of complex lures, predictive modeling, and dynamic alteration of the virtual computer environment.

4. **Computer program** comprising instructions which when the program is executed by a computer within a computer network (1) cause the computer to carry out the method of any of claims 1 to 3.

5. **Computer-readable medium** comprising computer-executable instructions causing a computer within a computer network (1) to perform the method according to any of claims 1 to 3.

6. **Data processing apparatus,** in particular a computer within a computer network (1), comprising means adapted for carrying out the method of any of claims 1 to 3.

7. **Data processing apparatus,** in particular distributed computer system, to divert a hacker attack on a computer network (1) away from critical network assets (2), wherein the computer network (1) comprises a multitude of computers (3), and wherein the hacker attack has been detected on one of the computers (3), **characterized in that** the apparatus comprises
a. a **hacker skill assessment module** (4) adapted to estimate a skill level of the hacker attack by collecting input data indicative of the skill level of the hacker attack and applying a computer-implemented machine-learning model to the input data,
b. a **digital twin generator** (5) adapted to create a digital twin (6) of the computer network (1), wherein the complexity of the generated digital twin (6) is based on the estimated skill level of the hacker attack,
c. a **decoy and lure management module** (7) adapted to generate and place lures (8) and/or decoys (9) in the network (1) and/or in the digital twin (6) to deceive, engage, and guide the hacker attack away from critical network assets (2) within the network (1),
**wherein**
d. the hacker skill assessment module (4) is adapted to continuously collect input data on the hacker's behavior and tools, and to updates the estimated skill level in real time, and
e. the digital twin generator (5) is adapted to adjust the complexity, placement and nature of the digital twin (6) if a change in the estimated skill level is detected

8. **Data processing apparatus** according to claim 7, **characterized in that** it further comprises a dedicated AI countermeasures module (10) adapted to detect and neutralize Al-driven hacker-attacks by dynamically adapting the digital twin.

9. **Data processing apparatus** according to claim 7 or 8, **characterized in that** it further comprises an incident reporting module adapted to generate a report documenting the hacker's activities, effectiveness of decoys, and overall system performance, while preserving evidence for law enforcement and prosecution.
